# EUROPÄISCHE PATENTSCHRIFT

(11) **EP 0 300 543 B1**
(45) Veröffentlichungstag und Bekanntmachung des Hinweises auf die Patenterteilung: **13.01.1993**
(21) Anmeldenummer: 88201429.3
(22) Anmeldetag: 07.07.1988
(51) Int. Cl.: C04B 38/06, B22F 1/00, B22F 3/10, B01J 35/08

(54) **Verfahren zum Herstellen von metallischen oder keramischen Hohlkugeln**
Process for the production of hollow metallic or ceramic spheres
Procédé de fabrication de sphères creuses métalliques ou céramiques

(30) Priorität: 22.07.1987 DE 3724156
(43) Veröffentlichungstag der Anmeldung: 25.01.1989
(73) Patentinhaber: NORDDEUTSCHE AFFINERIE AG, D-20033 Hamburg (DE)
(72) Erfinder: Jaeckel, Manfred, D-2854 Loxstedt (DE); Smigilski, Hartmuth, D-2000 Hamburg 74 (DE)
(74) Vertreter: Rieger, Harald, Dr.

(56) Entgegenhaltungen:
- EP-A- 0 119 913
- BE-A- 648 583
- DE-A- 2 342 948
- DE-A- 3 210 770
- FR-A- 2 151 055
- GB-A- 2 055 787

## Beschreibung

Die Erfindung betrifft ein Verfahren zum Herstellen von metallischen oder keramischen Hohlkugeln durch Aufbringen einer Feststoffschicht auf im wesentlichen kugelförmige Teilchen aus geschäumtem Polymer und Pyrolysieren des beschichteten Polymerkerns, wobei man die Teilchen zum Beschichten mit einer wäßrigen Suspension behandelt, die gelöstes oder suspendiertes Bindemittel und metallische und/oder keramische Pulverteilchen enthält, und daß man die beschichteten Teilchen trocknet und pyrolysiert und die Beschichtung bei Temperaturen von 1000 bis 1500°C sintert.

Aus DE-A-23 42 948 ist ein Verfahren dieser Art zum Erzeugen von Hohlkörpern aus Keramikmaterial bekannt. Hierbei wird eine Suspension aus Keramikpulver und Bindemittel auf Polymerkügelchen in einem Mischer oder Granulierteller aufgebracht.

Der Erfindung liegt die Aufgabe zugrunde, ein einfach zu handhabendes und wirtschaftliches Verfahren zur Herstellung von metallischen oder keramischen, im wesentlichen kugelförmigen Hohlkörpern mit dichter oder mikroporöser Schale hoher Festigkeit zu schaffen.

Die Erfindung löst diese Aufgabe beim eingangs genannten Verfahren dadurch, daß die Teilchen zum Beschichten in einem Wirbelschichtreaktor mit der wäßrigen Suspension behandelt und die beschichteten und getrockneten Teilchen bei 400 bis 500°C pyrolysiert werden.

Das Verfahren kann z.B. so durchgeführt werden, daß man die im wesentlichen kugelförmigen Teilchen aus insbesondere expandiertem Polystyrol mit einem Durchmesser von 1 bis 8 mm in den Wirbelschichtreaktor einbringt. In die Wirbelschicht aus geschäumten Polystyrolkugeln wird die wäßrige Suspension des Behandlungsstoffes eingetragen. Die Dauer der Behandlung richtet sich nach der Temperatur (z.B. zwischen 70 und 120°C) des Wirbelgases. Schichtauftrag und Trocknung sind im allgemeinen in einem Zeitraum von 5 bis 60 min beendet. Vorzugsweise wird die Temperatur so gewählt, daß die Behandlung in etwa 10 bis 30 min beendet ist.

Als Pulverteilchen werden keramische und/oder metallische Werkstoffe einer Korngröße von 0,0001 bis 0,2 mm verwendet. Die Auswahl der Teilchengröße richtet sich nach dem späteren Verwendungszweck der Hohlkugeln. Wenn dichte Kugelschalen erzielt werden sollen, werden Teilchen im unteren Korngrößenbereich gewählt. Mikroporöse Kugelschalen werden leichter mit Teilchen des oberen Korngrößenbereichs erzielt.

Pulverteilchen keramischer Werkstoffe werden insbesondere ausgewählt aus Verbindungen der Gruppe Al₂O₃, SiO₂, Cr₂O₃, ZrO₂, SiC und Si₃N₄. Metallische Pulverteilchen werden insbesondere ausgewählt aus Metallen der Gruppe Fe, Co, Ni, Cu, W, Mo, Edelmetalle und Hartmetalle. Es können aber auch Mischungen der Komponenten aus einer oder beiden Werkstoffgruppen eingesetzt werden. Zur Herstellung metallhaltiger, keramischer Hohlkugeln können häufig sowohl Metall- als auch die entsprechenden Metalloxidpulver oder deren Kombinationen verwendet werden. Besonders bei den leicht reduzierbaren Elementen, wie Fe, Ni, Co, Cu, Edelmetalle, W sowie Mo, können die Oxide eingesetzt werden. Eine mindestens teilweise Reduktion zu Metall wird während des Sinterprozesses vorgenommen.

Als organische Bindemittel, die in gelöster Form in der wäßrigen Dispersion vorliegen, kann eine Vielzahl von Polymeren verwendet werden. Insbesondere werden als organische Bindemittel Polymere aus der Gruppe Polyethylen, Polyacrylat, Polyvinylacetat, Polyvinylalkohol, Polyvinylchlorid, Polybutyral, Polyamid, Celluloseester, Phenolharz, Aminoharz und Epoxiharz eingesetzt. Insbesondere eignen sich Polyacrylate und Celluloseester. Anhand einfacher Versuche läßt sich ermitteln, welches Bindemittel unter Berücksichtigung des ausgewählten Pulverwerkstoffs und der dadurch vorgegebenen Pyrolyse- und Sinterbedingungen am geeignetsten ist.

Die wäßrige Suspension wird auf einen Bindemittelanteil von 3 bis 15 Gew.-%, bezogen auf den Pulverwerkstoff der Suspension, eingestellt. Die Behandlung der geschäumten Polystyrolkugeln im Wirbelschichtreaktor wird mit der Maßgabe vorgenommen, daß die Feststoffschicht im Trockenzustand eine Stärke von 0,01 bis 0,2 mm aufweist.

Unter Berücksichtigung des Bindemittels nach Art und Menge sowie ausreichender Schichtdicke besitzen die getrockneten Feststoffschichten ausreichende Festigkeit, so daß die beschichteten, im wesentlichen kugelförmigen Schaumstoffteilchen einem pyrolytischen Zersetzungsprozeß unterworfen werden können, ohne daß die Schale ihre sphärische Gestalt verliert. Bei der Pyrolyse des beschichteten Schaumstoffkerns verflüchtigt sich auch das Bindemittel der Feststoffschicht und hinterläßt eine selbsttragende Hohlkugel mit poröser Schalenstruktur.

Die Pyrolyse der beschichteten Schaumstoffteilchen kann je nach Art des verwendeten Pulvers in Luft, Inertgas oder unter reduzierenden Bedingungen vorgenommen werden. Die Aufheizzeit auf eine Temperatur von ca. 500°C beträgt etwa 1 bis 3 Stunden. Zur Erhöhung der sogenannten Grünfestigkeit kann es bei metallischen Pulvern zweckmäßig sein, unter leicht oxidierenden Bedingungen zu pyrolysieren. Hierdurch wird eine bessere Entfernung von Restkohlenstoff und eine festigkeitssteigernde Oxidhaut an den Oberflächen der Metallpulverteilchen erreicht.

An die pyrolytische Behandlung, die sowohl der Entfernung des beschichteten Polymerkerns als auch der mindestens teilweisen Entfernung des organischen Bindemittels dient, schließt sich der Sinterprozeß an. Dieser Sinterprozeß bei einer Temperatur von 1000 bis 1500°C kann - bei entsprechender Ausrüstung - in dem gleichen, auch zur Beschichtungsbehandlung verwendeten Wirbelschichtreaktor vorgenommen werden. Es kann aber auch zweckmäßig sein, Pyrolyse und Sinterprozeß in einem anderen Aggregat vorzunehmen, z.B. im Drehrohr- oder Krählofen. Die Atmosphäre im Ofenaggregat kann auf den zur Beschichtung jeweils verwendeten Pulverwerkstoff abgestimmt werden. Es kann daher im Vakuum, unter oxidierenden oder reduzierenden Bedingungen sowie unter Schutzgas gearbeitet werden.

Man kann das Zusammensintern der einzelnen Hohlkugeln entweder durch Bewegung oder durch eine äußere Beschichtung mit Inertpulver verhindern, wenn dieses bei der angewendeten Temperatur mit dem Hohlkugelwerkstoff keine chemischen oder physikalischen Reaktionen eingeht. Derartige Inertpulver lassen sich nach dem Sinterprozeß mechanisch oder chemisch leicht von den Hohlkugeln entfernen. Sie können auch als stützende Hülle für die eigentliche Hohlkugel während des Pyrolyse- und Sinterprozesses insbesondere dann wirken, wenn die Wandstärke der Hohlkugeln sehr dünn ist oder die eigentliche Hohlkugel-Pulverschicht nach der Pyrolyse noch keine ausreichende Grünfestigkeit besitzt. Als Inertpulver eignen sich je nach Hohlkugelwerkstoff z.B. Kohlenstoff, Al-Hydroxid oder Kreide.

Die Pyrolyse und der Sinterprozeß können auch ohne ständige Bewegung der beschichteten Schaumstoffteilchen vorgenommen werden. In diesem Fall werden die beschichteten Schaumstoffteilchen in eine Form mit perforierten Wänden eingebracht und durch Einwirkung von Wärmeenergie (ca. 100°C) sowie ggf. durch mechanischen Druck werden die Schaumstoffteilchen "nachgeschäumt", wobei stärkere Formfüllung sowie Verdichtung und Verklebung stattfindet. Nach Abkühlen kann der Forminhalt als formstabiler Körper entnommen und gehandhabt werden. Das heißt, der Formkörper guter "Grünfestigkeit" kann ohne Verlust seiner Form pyrolysiert und anschließend gesintert werden. Gemäß dieser Ausführungsform der Erfindung werden hochfeste Leichtkörper mit offenen und geschlossenen Zellen erzielt. Je nach Art und Dichte der Pulverwerkstoffe haben die Leichtkörper Raumgewichte zwischen 0,2 und 1 g/cm³. Die Zellendurchmesser liegen zwischen 1 und 8 mm und die Dicke der Zellwände beträgt 0,01 bis 0,2 mm. Derartige Leichtkörper finden insbesondere bei der Herstellung von Filterkörpern sowie Katalysatorträgern Verwendung. Weitere Anwendungsmöglichkeiten bieten sich für Leichtbausteine aus keramischen Werkstoffen in der Ofenbautechnik. Die technisch relevanten Werkstoffe sind hierbei Al₂O₃, ZrO₂, SiO₂ und SiC.

Die Figuren 1 bis 3 der Abbildung sind schematische Darstellungen.

Fig. 1a zeigt im Schnitt ein im wesentlichen kugelförmiges Schaumstoffteilchen (1) mit einer Feststoffpulver-Bindemittel-Schicht (2). In Fig. 1b ist (3) die teilverfestigte Pulverschicht nach dem Pyrolysieren, die den Hohlraum (4) umschließt. Fig. 1c zeigt den Hohlkörper der Fig. 1b nach Sinterung. Die Sinterschicht (5) umschließt den Hohlraum (4).

Fig. 2 zeigt in a) ein pyrolysiertes Schaumstoffteilchen, dessen Hohlraum (4) von einer teilverfestigten Pulverschicht (2) umschlossen ist, auf welche eine Inertpulverschicht (6) aufgetragen ist. In b) ist die Sinterschicht mit (5) bezeichnet, welche den Hohlraum (4) umschließt. Die noch lockere Inertpulverschicht (6) läßt sich mechanisch oder chemisch entfernen.

Fig. 3 zeigt eine gesinterte Zellstruktur mit annähernd dodekaedrischen Einzelzellen.

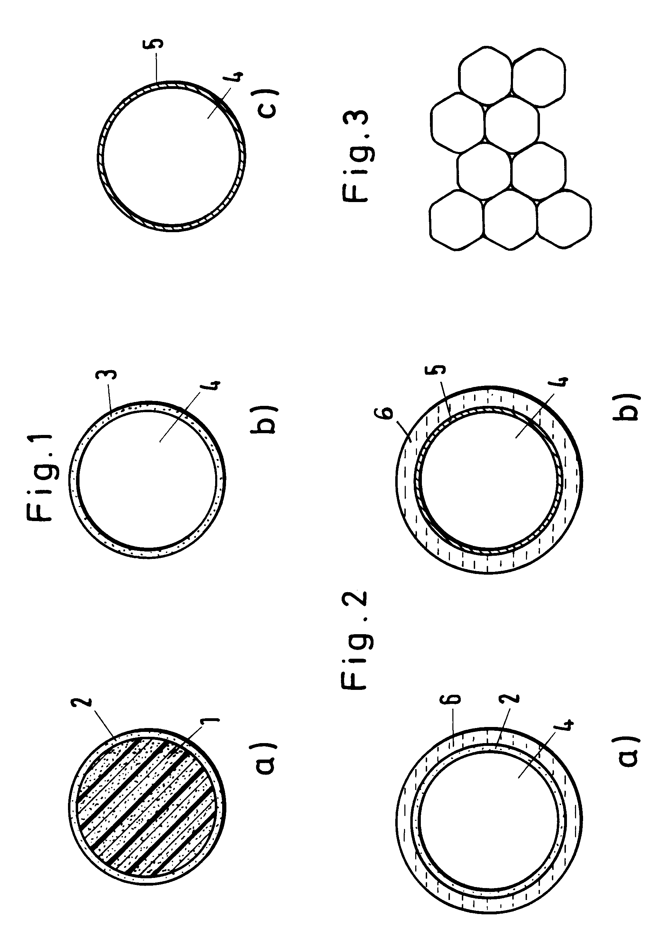

Die Erfindung wird anhand der nachstehenden Beispiele näher und beispielhaft erläutert.

### Beispiel 1

### Herstellung von Kupfer-Hohlkugeln

Handelsübliches treibmittelhaltiges Polystyrolgranulat (z.B. STYROPOR VP 203 der Fa. BASF AG, Teilchengröße ca. 1 mm) wird in siedendem Wasser vorgeschäumt. Es entstehen 3,5 bis 4 mm große Schaumstoff-Granulatteilchen mit weitgehend kugelförmiger Gestalt. Das Raumgewicht dieser vom Wasser abgetrennten und getrockneten Kugeln beträgt etwa 20 g/l. Von diesem Schaumstoffgranulat werden ca. 2 l in ein Wirbelschicht-Laborgerät (z.B. der Firma AEROMATIC, CH-4416 Bubendorf (Schweiz)) eingebracht und mit einer kupferpulverhaltigen Dispersion nachfolgender Zusammensetzung so lange beschichtet, bis ein Pulverauftrag von ca. 300 g/l erreicht ist.

| 1 Liter Dispersion enthält: | | |
|---|---|---|
| ca. | 400 g | Cu-Pulver (Teilchengröße ca. 0,001 mm) |
| | 10 g | Celluloseester (z.B. TYLOSE C30 der Fa. Hoechst AG) |
| | 80 g | wäßrige 50 %ige Polyacrylat-Dispersion (PLEXTOL P 540 der Fa. Röhm GmbH) |
| ca. | 900 g | destilliertes Wasser |

Die mit der Dispersion während etwa 20 min beschichteten Schaumstoffkugeln werden in Luftatmosphäre in einem Pyrolyseofen innerhalb von 2 h auf 500°C erhitzt. Es entstehen formstabile Kupferoxid-Hohlkugeln, welche nicht miteinander verklebt sind. Die erhaltenen Hohlkugeln werden anschließend in einem Ofen unter Wasserstoff-Atmosphäre reduziert.

### Beispiel 2

### Herstellung von Eisen-Schwammkörpern

Es werden zunächst entsprechend der Arbeitsweise von Beispiel 1 mit Eisenpulver beschichtete Schaumstoffkugeln mit ca. 300 g Pulverauftrag hergestellt. Die Eisenpulver-Dispersion wird unter Verwendung der gleichen Rezeptur wie in Beispiel 1 hergestellt. Es werden lediglich die 400 g Kupferpulver gegen 400 g Eisenpulver ausgetauscht (Durchmesser 2 bis 8 Mikron). Die beschichteten Schaumstoffkugeln werden in eine plattenförmige Aluminiumform mit den Maßen 150 x 150 x 30 mm eingebracht. Die Vorder- und Rückseite der Form besitzen gleichmäßig verteilte Bohrungen von 8 mm. Die gefüllte Form wird nun zum Nachschäumen in siedendes Wasser getaucht und ca. 2 min darin belassen. Danach wird die Form abgekühlt, geöffnet und der plattenförmige Körper entnommen. Dieser wird sodann während 3 h bei 85°C getrocknet.

Zur Entfernung der Styroporkerne sowie des Bindemittels wird in einem Ofen unter reduzierenden Bedingungen (Stickstoff/Wasserstoff) zunächst bei ca. 500°C pyrolysiert und im gleichen Ofen anschließend während 1 h bei Sintertemperaturen von ca. 1100°C gesintert. Nach dem Abkühlen erhält man einen Eisenschwammkörper mit einem Raumgewicht von ca. 0,45 g/cm³ und guter Festigkeit.

### Beispiel 3

### Herstellung von Al₂O₃-Schwammkörpern

Es werden zunächst entsprechend der Arbeitsweise des Beispiels 1 Schaumstoffteilchen aus expandiertem Polystyrol beschichtet. Hierzu werden Schaumstoffteilchen (Durchmesser ca. 3 mm) eines Volumens von 2 l (20 g) mit einem Auftrag von 200 g Aluminiumoxid einer Teilchengröße von 0,001 bis 0,005 mm versehen. Das Bindemittelsystem ist das gleiche wie in Beispiel 1, enthält jedoch statt Kupferpulver 400 g Al-Oxid-Pulver (Typ ZPS-402 der Fa. Martinswerk, Bergheim/Köln).

Das Nachschäumen zu einem Plattenkörper wird entsprechend der in Beispiel 2 beschriebenen Arbeitsweise durchgeführt. Die Pyrolyse des Formkörpers erfolgt während 4 h bei 500°C, hierauf wird der Sinterprozeß in einem Hochtemperaturofen bei 1700°C während 1 h vorgenommen. Nach dem Abkühlen erhält man einen leichten Keramik-Schwammkörper mit guter Festigkeit.

## Patentansprüche

1. Verfahren zum Herstellen von metallischen oder keramischen Hohlkugeln durch Aufbringen einer Feststoffschicht auf im wesentlichen kugelförmige Teilchen aus geschäumtem Polymer und Pyrolysieren des beschichteten Polymerkerns, wobei man die Teilchen zum Beschichten mit einer wäßrigen Suspension behandelt, die gelöstes oder suspendiertes Bindemittel und metallische und/oder keramische Pulverteilchen enthält, und daß man die beschichteten Teilchen trocknet und pyrolysiert und die Beschichtung bei Temperaturen von 1000 bis 1500°C sintert, dadurch gekennzeichnet, daß die Teilchen zum Beschichten in einem Wirbelschichtreaktor mit der wäßrigen Suspension behandelt und die beschichteten und getrockneten Teilchen bei 400 bis 500°C pyrolysiert werden.

2. Verfahren nach Anspruch 1, dadurch gekennzeichnet, daß als Pulverteilchen keramische Werkstoffe aus der Gruppe Al₂O₃, SiO₂, Cr₂O₃, ZrO₂, SiC und Si₃N₄ verwendet werden.

3. Verfahren nach Anspruch 1, dadurch gekennzeichnet, daß als Pulverteilchen Metalle aus der Gruppe Fe, Co, Ni, Cu, W, Mo, Edelmetalle und Hartmetalle verwendet werden.

4. Verfahren nach einem der Ansprüche 1 bis 3, dadurch gekennzeichnet, daß als organische Bindemittel Polymere aus der Gruppe Polyethylen, Polyacrylat, Polyvinylacetat, Polyvinylalkohol, Polyvinylchlorid, Polybutyral, Polyamid, Celluloseester, Phenolharz, Aminoharz und Epoxiharz verwendet werden.

5. Verfahren nach einem der Ansprüche 1 bis 4, dadurch gekennzeichnet, daß Pulver einer Teilchengröße von 0,0001 bis 0,2 mm verwendet wird.

6. Verfahren nach einem der Ansprüche 1 bis 5, dadurch gekennzeichnet, daß die Feststoffschicht im Trockenzustand eine Stärke von 0,01 bis 0,2 mm aufweist.

7. Verfahren nach einem der Ansprüche 1 bis 6, dadurch gekennzeichnet, daß die wäßrige Suspension einen Bindemittelanteil von 3 bis 15 Gew.-%, auf Pulverfeststoff bezogen, enthält.

## Claims

1. A process for producing metallic or ceramic hollow spheres by applying a solids layer to substantially spherical particles of foamed polymer and pyrolysing the coated polymer core, in which the particles are treated with an aqueous suspension for coating which contains dissolved or suspended binder and metallic and/or ceramic powder particles, and that the coated particles are dried and pyrolysed and the coating is sintered at temperatures of 1000 to 1500°C, characterised in that the particles are treated with the aqueous suspension in a fluidised bed reactor for coating and the coated and dried particles are pyrolysed at 400 to 500°C.

2. A process according to Claim 1, characterised in that ceramic materials from the group Al₂O₃, SiO₂, Cr₂O₃, ZrO₂, SiC and Si₃N₄ are used as powder particles.

3. A process according to Claim 1, characterised in that metals from the group Fe, Co, Ni, Cu, W, Mo, noble metals and hard metals are used as powder particles.

4. A process according to one of Claims 1 to 3, characterised in that polymers from the group polyethylene, polyacrylate, polyvinyl acetate, polyvinyl alcohol, polyvinyl chloride, polybutyral, polyamide, cellulose ester, phenol resin, amino resin and epoxy resin are used as organic binders.

5. A process according to one of Claims 1 to 4, characterised in that powder having a particle size of 0.0001 to 0.2 mm is used.

6. A process according to one of Claims 1 to 5, characterised in that the solids layer in the dry state has a thickness of 0.01 to 0.2 mm.

7. A process according to one of Claims 1 to 6, characterised in that the aqueous suspension has a binder content of 3 to 15% by weight, relative to powder solids.

## Revendications

1. Procédé de fabrication de sphères creuses métalliques ou céramiques par dépôt d'une couche de matière solide sur des particules sensiblement sphériques en polymère mousse et par pyrolyse du noyau de polymère appliqué en revêtement, qui consiste à traiter les particules de revêtement par une suspension aqueuse qui contient un liant dissous ou en suspension et des particules pulvérulentes métalliques et/ou céramiques, et à sécher et à pyrolyser les particules revêtues et à fritter le revêtement à des températures de 1000 à 1500°C, caractérisé en ce qu'il consiste à traiter, pour le revêtement, les particules par la suspension aqueuse dans un réacteur à lit fluidisé et à pyrolyser les particules revêtues et séchées entre 400 et 500°C.

2. Procédé suivant la revendication 1, caractérisé en ce qu'il consiste à utiliser, comme particules pulvérulentes, des matériaux céramiques choisis parmi Al₂O₃, SiO₂, Cr₂O₃, ZrO₂, SiC et Si₃N₄.

3. Procédé suivant la revendication 4, caractérisé en ce qu'il consiste à utiliser, comme particules pulvérulentes, des métaux choisis parmi Fe, Co, Ni, Cu, W, Mo, des métaux nobles et des métaux durs.

4. Procédé suivant l'une des revendications 1 à 3, caractérisé en ce qu'il consiste à utiliser, comme liant organique, des polymères choisis parmi le polyéthylène, le polyacrylate, le poly(acétate de vinyle), l'alcool polyvinylique, le poly(chlorure de vinyle), le polybutyral, le polyamide, les esters de cellulose, les résines phénoliques, les résines aminées et les résines époxydes.

5. Procédé suivant l'une des revendications 1 à 4, caractérisé en ce qu'il consiste à utiliser une poudre d'une granulométrie de 0,0001 à 0,2 mm.

6. Procédé suivant l'une des revendications 1 à 5, caractérisé en ce que la couche de matière solide a, à l'état sec, une épaisseur de 0,01 à 0,2 mm.

7. Procédé suivant l'une des revendications 1 à 6, caractérisé en ce que la suspension aqueuse contient une proportion de liant de 3 à 15 % en poids rapportée à la matière solide pulvérulente.
